# EUROPEAN PATENT SPECIFICATION

(11) **EP 3 797 013 B1**
(45) Date of publication and mention of the grant of the patent: **23.02.2022**
(21) Application number: 19724877.6
(22) Date of filing: 23.05.2019
(51) Int. Cl.: B23K 35/30, B23K 35/02, C22C 19/05, C22C 30/00

(54) **AN AUSTENITIC NICKEL-BASE ALLOY**
AUSTENITISCHE NICKELBASIERTE LEGIERUNG
ALLIAGE À BASE DE NICKEL AUSTÉNITIQUE

(30) Priority: 23.05.2018 EP 18173869
(43) Date of publication of application: 31.03.2021
(73) Proprietor: AB Sandvik Materials Technology, 811 81 Sandviken (SE)
(72) Inventor: STENVALL, Peter, 81138 Sandviken (SE); KIVISÄKK, Ulf, 81191 Sandviken (SE)
(74) Representative: Setréus, Ellen
(86) International application number: PCT/EP2019/063301
(87) International publication number: WO 2019/224290

(56) References cited:
- EP-A1- 2 119 802
- EP-A1- 2 671 669
- JP-B2- 406 036 995

## Description

### Technical field

The present disclosure relates to an austenitic nickel-base alloy having a high content of Ni, Mo and Cr which is suitable for use as a weld metal. A weld metal containing the present austenitic nickel-base alloy will have a high resistance against the formation of hot cracks. The present disclosure also relates to an object comprising the austenitic nickel-base alloy and to a weld metal comprising the austenitic nickel-based alloy.

Further, the present disclosure also relates to a use of the present austenitic nickel-based alloy

### Background

Many of the nickel-base alloys used as weld metals for corrosive applications have insufficient hot cracking resistance. Presence of hot cracks will cause poor strength and ductility of the welded parts. If the cracks are surface breaking, the corrosion resistance will be substantially impaired.

Patent application JPS63212090 A discloses a method of welding austenitic steel using a welding wire, the high-alloy austenitic steel includes Ni ≧ 20%, Cr ≧ 16%, C ≦ 0.05%, P ≦ 0.015%, and S ≦ 0.010. %, the balance consists of Fe and impurities, and the welding wire has Ni ≧ 25%, Cr: 20 to 30%, Mo: 2 to 10%, C ≦ 0.05%, Si ≦ 0.9%, P ≦ 0.015%, S ≦ 0.010%, with the balance being Fe and impurities.

There is therefore a need for a nickel-based alloy which can be used as a weld metal and which has a high resistance against hot cracking formation and additionally has good corrosion resistance.

### Summary

One of the aspects of the present disclosure is to solve or to at least reduce the problems mentioned above.

Thus, the present invention therefore provides an austenitic nickel-based alloy as defined in present claim 1.

Hence, the present austenitic nickel-based alloy will provide for resistance against formation of hot cracks and will also have good corrosion resistance. Additionally, a weld metal comprising this alloy will have good ductility.

### Brief description of the figures

- Figure 1: discloses an example of a Varestraint testing apparatus (figure from ISO/TR 17641-3), dimensions is in millimeters;
- Figure 2: discloses the total crack length (TCL) plotted against the chromium content.

### Detailed description

The present invention relates to an austenitic nickel-based alloy having the following elements in weight%:

| | |
|---|---|
| C | ≤ 0.03; |
| Si | ≤ 1.0; |
| Mn | ≤ 1.5; |
| S | ≤ 0.03; |
| P | ≤ 0.03; |
| Cr | 25.0 to 29.0; |
| Ni | 42.0 to 52.0; |
| Mo | 6.0 to 9.0; |
| N | 0.07 - 0.11; |
| Cu | ≤ 0.4; |

optionally one or more of the following elements Al, Mg, Ca, Ce, and B in a total content of these elements is ≤ 1.0 balance Fe and unavoidable impurites and having a total crack length which is less than 2.5 mm at a strain (ε) of 2.9 % as measured by Varestraint testing (ISO/TR 17641-3).

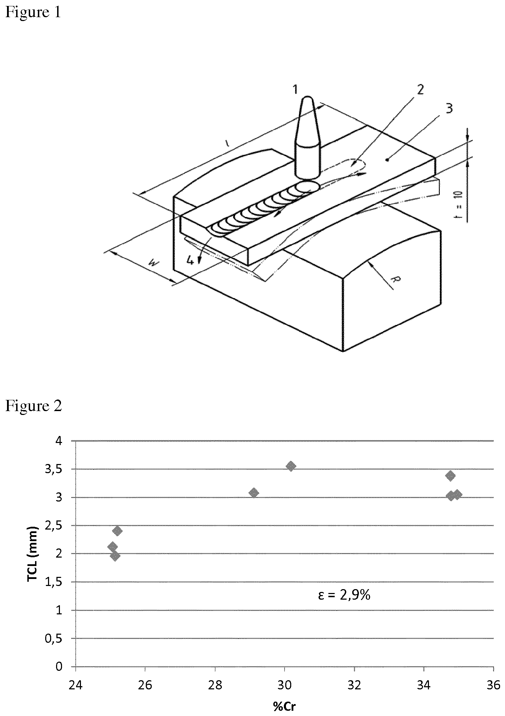

An important property for weldability of an alloy is how easily hot cracks are formed in and on the surface of the alloy during welding. Hot cracking is a phenomenon occurring in stainless alloys having austenitic solidification and may be very troublesome because of the large inner tensions formed during the welding process. The susceptibility to the formation of hot cracks can be measured by using Varestraint testing, for example described in ISO/TR 17641-3. With Varestraint testing, the alloy is provoked to form hot cracks during welding in a controlled way by bending a specimen of the alloy during welding. The bending is made in order to obtain specified strain in the surface area of the specimen, see Figure 1. After the formation of hot cracks, the total crack length (TCL) is measured. The TCL is a measure of the alloy's susceptibility to hot cracking.

The present invention also relates to a weld metal comprising the austenitic nickel-based alloy as defined hereinabove or hereinafter. The weld metal may be a fused weld filler material or a fused parent material or a combination thereof. The parent material may be selected from a tube, a pipe, a strip, a plate or a sheet. The weld filler material may be selected from a wire, a rod, a strip or a covered electrode.

The present invention also relates to an object comprising the austenitic nickel-based alloy as defined hereinabove or hereinafter. The object may be selected from, as example but not limited thereto, a tube, a pipe, a bar, a hollow, a billet, a bloom, a strip, a wire, a plate or a sheet.

Furthermore, the present invention also relates to a use of the austenitic nickel-based alloy as defined hereinabove or hereinafter in welding applications. By welding applications is for example meant two or more objects that are welded together or an object subjected to overlay welding, e.g. one or more components, e.g. tubes are to be welded together. The austenitic nickel-based alloy as defined hereinabove or hereinafter may is these applications be used in the object itself and/or in the weld filler material.

Hereinafter, the alloying elements of the austenitic nickel-based as defined hereinabove or hereinafter are discussed:

### Carbon (C): ≤ 0.03 wt%

C is an impurity contained in austenitic alloys. When the content of C exceeds 0.03 wt%, the corrosion resistance is reduced due to the precipitation of chromium carbide in the grain boundaries. Thus, the content of C is ≤ 0.03 wt%, such as ≤ 0.02 wt%.

### Silicon (Si): ≤ 1.0 wt%

Si is an element which may be added for deoxidization. However, Si will promote the precipitation of the intermetallic phases, such as the sigma phase, therefore Si is contained in a content of ≤ 1.0 wt%, such as ≤ 0.5 wt%, such as ≤ 0.3 wt%. According to one embodiment the lower limit of Si is 0.01 wt%.

### Manganese (Mn): ≤ 1.5 wt%

Mn is often used to for binding sulphur by forming MnS and thereby increasing the hot ductility of the austenitic alloy. Mn will also improve deformation hardening of the austenitic alloy during cold working. However, too high content of Mn will reduce the strength of the austenitic alloy. Accordingly, the content of Mn is set at ≤ 1.5 wt%, such ≤ 1.2 wt%. According to one embodiment, the lower limit of Mn is 0.01 wt%.

### Phosphorus (P): ≤ 0.03 wt%

P is an impurity contained in the austenitic alloy and is well known to have a negative effect on the hot workability and the resistance to hot cracking. Accordingly, the content of P is ≤ 0.03 wt%, such as ≤ 0.02 wt%.

### Sulphur (S): 1≤ 0.03 wt%

S is an impurity contained in the austenitic alloy, and it will deteriorate the hot workability. Accordingly, the allowable content of S is ≤ 0.03 wt%, such as ≤ 0.02 wt%.

### Copper (Cu): ≤ 0.4 wt%

Cu may reduce the corrosion rate in sulphuric acid. However, Cu together with Mn will reduce the hot workability, therefore the maximum content of Cu is ≤ 0.4 wt%, such as ≤ 0.25 wt%. According to one embodiment, the lower limit of Cu is 0.01 wt%.

### Nickel (Ni): 42.0 to 52.0 wt%

Ni is an austenite stabilizing element as it will stabilize the austenitic microstructure in combination with Cr and Mo. Furthermore, Ni will also contribute to the resistance to stress corrosion cracking in both chlorides and hydrogen sulfide environments. Thus, a content of Ni of 42.0 wt% or more is required. However, an increased Ni content will decrease the solubility of N, therefore the maximum content of Ni is 52.0 wt%. According to one embodiment of the present austenitic alloy, the content of Ni is of from 42.0 to 51.0 wt.

### Chromium (Cr): 25.0 to 29.0 wt%

Cr is an alloying element that will improve the stress corrosion cracking resistance. Furthermore, the addition of Cr will increase the solubility of N. When the content of Cr is less than 25.0 wt%, the effect of Cr is not sufficient for corrosion resistance. The inventors have surprisingly found that the chromium content of an alloy is important for the resistance against hot cracking. As can be seen from figure 2, the Cr content must be less than 29.0 wt% in order to have a total crack length of 2.5 mm. A total crack length of less than 2.5 mm means that the alloy will have a high resistance against hot cracking. Accordingly, the content of Cr is of from 25.0 to 29.0 wt%, such as 25.0 to 28.0 wt%, such as 25.0 to 27.0 wt%, such as 25.0 to 26.0 wt%.

### Molybdenum (Mo): 6.0 to 9.0 wt%

Mo is an alloying element which is effective in stabilizing the passive film formed on the surface of the austenitic alloy. Furthermore, Mo is effective in improving the stress corrosion cracking resistance, especially in H₂S-environments. When the content of Mo is less than 6.0 wt%, the resistance for stress corrosion cracking resistance in H₂S-environments is not enough and when the content of Mo is more than 9.0 wt% the hot workability is deteriorated. Accordingly, the content of Mo is of from 6.0 to 9.0 wt%, such as of from 6.1 to 9.0 wt%.

### Nitrogen (N): 0.07 to 0.11 wt%

N is an effective alloying element for increasing the strength of the austenitic alloy by using solution hardening and it is also beneficial for the improving the structure stability. The addition of N will also improve the deformation hardening during cold working. However, when the content of N is more than 0.11 wt%, the flow stress will be too high for efficient hot working and the stress corrosion cracking resistance will also be reduced. Thus, the content of N is of from 0.07 to 0.11 wt%, such as of from 0.07 to 0.10 wt%.

The austenitic nickel-based alloy as defined hereinabove or herein after may optionally comprise one or more of the following elements Al, Mg, Ca, Ce, and B. These elements may be added during the manufacturing process in order to enhance e.g. deoxidation, corrosion resistance, hot ductility or machinability. However, as known in the art, the addition of these elements and the amount thereof will depend on which alloying elements are present in the alloy and which effects are desired. If added the total content of these elements is ≤ 1.0 wt%, such as ≤ 0.5 wt%.

According to the invention, the austenitic nickel-based alloy consists of all the alloying elements mentioned hereinabove or hereinafter in the ranges mentioned hereinabove or hereinafter.

The term "impurities" as referred to herein means substances that will contaminate the austenitic alloy when it is industrially produced, due to the raw materials, such as ores and scraps, and due to various other factors in the production process and are allowed to contaminate within the ranges not adversely affecting the properties of the austenitic alloy as defined hereinabove or hereinafter.

The alloy as defined hereinabove or hereinafter may be manufactured by using conventional metallurgical manufacturing methods for example methods comprising steps such as hot working and/or cold working. The manufacturing method may optionally comprise heat treatment steps and/or aging steps. Examples of hot working processes are hot rolling, forging and extrusion. Examples of cold working processes are pilgering, drawing and cold rolling. Examples of heat treatment processes are soaking and annealing, such as solution annealing or quench annealing.

The present invention also relates to objects comprising the austenitic nickel-based alloy as defined hereinabove or hereinafter such as a tube, a pipe, a bar, a hollow, a billet, a bloom, a strip, a wire, a plate and a sheet.

The present invention is further illustrated by the following non-limiting examples.

### EXAMPLES

### Example 1

The alloys of Table 1 were manufactured by melting in a HF (High Frequency) induction furnace of 270 kg and thereafter they were made into ingot by casting into 9"mould. After casting, the molds were removed and the ingots were quenched in water. The ingots were forged to flat bars and hot rolled to plates 10mm in thickness. After quench annealing at 1200°C for 15 minutes followed by water quenching, the plates were machined to test coupons 8 × 40 × 250mm. The compositions of the experimental heats are given in Table 1.

**Table 1. Chemical analysis of the experimental heats, in weight%. The balance is Fe and unavoidable impurities. Alloys marked with a "^{∗}" is within the present disclosure**

| **Sample** | **C** | **Si** | **Mn** | **P** | **S** | **Cr** | **Ni** | **Mo** | **N** | **Cu** |
|---|---|---|---|---|---|---|---|---|---|---|
| 1^{∗} | 0.006 | 0.25 | 1.03 | 0.007 | <0.0005 | 25.14 | 42.37 | 6.45 | 0.09 | 0.19 |
| 2^{∗} | 0.009 | 0.23 | 1.04 | 0.006 | 0.001 | 25.07 | 49.61 | 6.47 | 0.09 | 0.18 |
| 3 | 0.006 | 0.21 | 1.07 | 0.006 | 0.001 | 29.12 | 42.48 | 6.44 | 0.08 | 0.20 |
| 4 | 0.006 | 0.25 | 1.08 | 0.006 | 0.001 | 30.19 | 50.24 | 6.50 | 0.10 | 0.21 |
| 5 | 0.01 | 0.21 | 1.04 | 0.006 | 0.001 | 34.78 | 43.03 | 6.55 | 0.12 | 0.19 |
| 6 | 0.008 | 0.22 | 1.03 | 0.006 | <0.0005 | 34.76 | 49.56 | 6.48 | 0.12 | 0.18 |
| 7^{∗} | 0.006 | 0.25 | 1.03 | 0.006 | <0.0005 | 25.21 | 50.24 | 8.85 | 0.09 | 0.18 |

Varestraint testing was performed on the test coupons. At a strain (ε) of 2.9 %, hot cracks were formed on the samples and the total crack length was measured according to ISO/TR 17641-3 and plotted vs the chromium content as shown in Figure 2. As can be seen from this figure TCL was below 2.5 mm at a chromium content below 29 wt%.

**Table 2 Result from Varestraint testing**

| **Sample** | **TLC less than 2.5 mm** |
|---|---|
| 1 | Yes |
| 2 | Yes |
| 3 | No |
| 4 | No |
| 5 | No |
| 6 | No |
| 7 | Yes |

## Claims

1. An austenitic nickel-based alloy comprising the following alloying elements in weight%:
| | |
|---|---|
| C | ≤ 0.03; |
| Si | ≤ 1.0; |
| Mn | ≤ 1.5; |
| S | ≤ 0.03; |
| P | ≤ 0.03; |
| Cr | 25.0 to 29.0; |
| Ni | 42.0 to 52.0; |
| Mo | 6.0 to 9.0; |
| N | 0.07 - 0.11; |
| Cu | ≤ 0.4; |
Optionally one or more of the following elements Al, Mg, Ca, Ce, and B in a total content of these elements is ≤ 1.0 balance Fe and unavoidable impurities;
having a total crack length which is less than 2.5 mm at a strain, ε, of 2.9 % as measured by Varestraint testing ISO/TR 17641-3.

2. The austenitic nickel-based alloy according to claim 1, wherein the Cr content is of from 25.0 to 28.0 weight%.

3. The austenitic nickel-based material according to claim 1, wherein the Cr content is of from 25.0 to 27.0 weight%.

4. The austenitic nickel-based according to claim 1, wherein the Cr content is of from 25.0 to 26.0 weight%.

5. The austenitic nickel-based alloy according to any of claims 1 to 4, wherein the Mn content is ≤ 1.2 weight%.

6. The austenitic nickel-based alloy according to any of claims 1 to 5, wherein the Si content is ≤ 0.5 weight%, such as ≤ 0.3 weight%.

7. The austenitic nickel-based alloy according to any one of claims 1 to 6, wherein the Mo content is between 6.1 to 9.0 weight%.

8. The austenitic nickel-based alloy according to any one of claims 1 to 7, wherein the Ni content is between 42.0 to 51.0 weight%.

9. The austenitic nickel-based alloy comprising the weld metal according to claim 1 to 8, wherein the N content is of from 0.07 to 0.10 weight%.

10. A weld metal comprising the austenitic nickel-based alloy according to any one of claim 1 to 9.

11. The weld metal according to claim 10, wherein the weld metal is a fused weld filler material or fused parent material or a combination thereof.

12. The weld metal according to claim 10, wherein the parent material may be selected from a tube, a pipe, a strip, a plate or a sheet and the weld filler material may be selected from a wire, a rod, a strip or a covered electrode.

13. An object comprising the austenitic nickel-base alloy according to any one of claims 1 to 9, wherein the object is a tube, a pipe, a bar, a hollow, a billet, a bloom, a strip, a wire, a rod, a plate or a sheet.

14. A use of the austenitic nickel-based alloy according to any one of claims 1 to 9 in welding applications.

## Patentansprüche

1. Austenitische, auf Nickel basierende Legierung, die folgende Elemente in Gewichts-% umfasst:
| | |
|---|---|
| C | ≤ 0,03; |
| Si | ≤ 1,0; |
| Mn | ≤ 1,5; |
| S | ≤ 0,03; |
| P | ≤ 0,03; |
| Cr | 25,0 bis 29,0; |
| Ni | 42,0 bis 52,0; |
| Mo | 6,0 bis 9,0; |
| N | 0,07-0,11; |
| Cu | ≤ 0,4; |
Optional eines oder mehrere der nachstehenden Elemente Al, Mg, Ca, Ce und B mit einem Gesamtgehalt dieser Elemente von ≤1,0 Rest-Fe und unvermeidbare Unreinheiten; die eine Gesamtrisslänge aufweisen, die weniger als 2,5 mm aufweisen an einem Stamm, ε, von 2,9 %, gemessen mittels Varestraint-Test ISO/TR 17641-3.

2. Austenitische, auf Nickel basierende Legierung nach Anspruch 1, wobei der Cr-Gehalt von 25,0 bis 28,0 Gew.% beträgt

3. Austenitisches, auf Nickel basierendes Material nach Anspruch 1, wobei der Cr-Gehalt von 25,0 bis 27,0 Gew.% beträgt.

4. Austenitisches, auf Nickel basierendes Material nach Anspruch 1, wobei der Cr-Gehalt von 25,0 bis 26,0 Gew.% beträgt.

5. Austenitische, auf Nickel basierende Legierung nach einem der Ansprüche 1 bis 4, wobei der Mn-Gehalt ≤ 1,2 Gew.% beträgt.

6. Austenitische, auf Nickel basierende Legierung nach einem der Ansprüche 1 bis 5, wobei der Si-Gehalt ≤ 0,5 Gew.%, wie ≤ 0,3 Gew.% beträgt.

7. Austenitische, auf Nickel basierende Legierung nach einem der Ansprüche 1 bis6, wobei der Mo-Gehalt zwischen 6.1 und 9.0 Gew.% beträgt.

8. Austenitische, auf Nickel basierende Legierung nach einem der Ansprüche 1 bis 7, wobei der Ni Gehalt zwischen 42.0 und 51.0 Gew.% beträgt

9. Austenitische, auf Nickel basierende Legierung, umfassend das Schweißmetall nach Anspruch 1 bis8, wobei der N-Gehalt von 0.07 bis 0.10 Gew.% beträgt.

10. Schweißmetall, umfassend die austenitische, auf Nickel basierende Legierung nach einem der Ansprüche 1 bis 9.

11. Schweißmetall nach Anspruch 10, wobei des Schweißmetall ein geschmolzenes Schweißfüllmaterial oder geschmolzenes Ausgangsmaterial oder eine Kombination daraus ist.

12. Schweißmetall nach Anspruch 10, wobei das Ausgangsmaterial ausgewählt sein kann aus einem Rohr, einer Röhre, einem Streifen, einer Platte oder einem Bogen und das Schweißfüllmaterial ausgewählt sein kann als einem Draht, einer Stange, einem Streifen oder einer überzogenen Elektrode.

13. Gegenstand, umfassend die austenitische, auf Nickel basierende Legierung nach einem der Ansprüche 1 bis 9, wobei der Gegenstand ein Rohr, eine Röhre, eine Stange, ein Hohlraum, ein Strang, eine Blüte, ein Streifen, ein Draht, eine Stange, eine Platte oder ein Bogen ist.

14. Verwendung der austenitischen, auf Nickel basierenden Legierung nach einem der Ansprüche 1 bis 9 in Schweißanwendungen.

## Revendications

1. Alliage austénitique à base de nickel comprenant les éléments d'alliage suivants en % en poids :
| | |
|---|---|
| C | ≤0,03 ; |
| Si | ≤ 1,0 ; |
| Mn | ≤ 1,5 ; |
| S | ≤0,03 ; |
| P | ≤0,03 ; |
| Cr | 25,0 à 29,0 ; |
| Ni | 42,0 à 52,0 ; |
| Mo | 6,0 à 9,0 ; |
| N | 0,07-0,11 ; |
| Cu | ≤ 0,4 ; |
en option un ou plusieurs des éléments suivants Al, Mg, Ca, Ce, et B dans une teneur totale de ces éléments est ≤1, 0, le reste du Fe et des impuretés inévitables ; présentant une longueur de cassure totale qui est inférieure à 2,5 mm à une contrainte, ε, de 2,9 % comme mesurée par l'essai de Varestraint ISO/TR 17641-3.

2. Alliage austénitique à base de nickel selon la revendication 1, dans lequel la teneur en Cr va de 25,0 à 28,0 % en poids.

3. Alliage austénitique à base de nickel selon la revendication 1, dans lequel la teneur en Cr va de 25,0 à 27,0 % en poids.

4. Alliage austénitique à base de nickel selon la revendication 1, dans lequel la teneur en Cr va de 25,0 à 26,0 % en poids.

5. Alliage austénitique à base de nickel selon l'une quelconque des revendications 1 à 4, dans lequel la teneur en Mn est ≤ 1,2 % en poids.

6. Alliage austénitique à base de nickel selon l'une quelconque des revendications 1 à 5, dans lequel la teneur en Si est ≤ 0,5 % en poids, tel que ≤ 0,3 % en poids.

7. Alliage austénitique à base de nickel selon l'une quelconque des revendications 1 à 6, dans lequel la teneur en Mo est entre 6,1 et 9,0 % en poids.

8. Alliage austénitique à base de nickel selon l'une quelconque des revendications 1 à 7, dans lequel la teneur en Ni est entre 42,0 et 51,0 % en poids.

9. Alliage austénitique à base de nickel comprenant le métal fondu selon les revendications 1 à 8, dans lequel la teneur en N va de 0,07 à 0,10 % en poids.

10. Métal fondu comprenant l'alliage austénitique à base de nickel selon l'une quelconque des revendications 1 à 9.

11. Métal fondu selon la revendication 10, dans lequel le métal fondu est un matériau de métal d'apport fondu ou matériau parent fondu ou une combinaison de ceux-ci.

12. Métal fondu selon la revendication 10, dans lequel le matériau parent peut être sélectionné à partir d'un tube, un tuyau, une bande, une plaque ou une feuille et le matériau de métal d'apport peut être sélectionné à partir d'un fil, une baguette, une bande ou une électrode recouverte.

13. Objet comprenant l'alliage austénitique à base de nickel selon l'une quelconque des revendications 1 à 9, dans lequel l'objet est un tube, un tuyau, une barre, une cavité, une billette, un lingot, une bande, un fil, une baguette, une plaque ou une feuille.

14. Utilisation de l'alliage austénitique à base de nickel selon l'une quelconque des revendications 1 à 9 dans des applications de soudage.
